# EUROPEAN PATENT APPLICATION

(11) **EP 2 911 445 A1**
(43) Date of publication of application: **26.08.2015**
(21) Application number: 12887367.6
(22) Date of filing: 05.11.2012
(51) Int. Cl.: H04W 28/16, H04L 12/851

(54) **METHOD AND NETWORK DEVICE FOR RECEIVING PACKET**

(71) Applicant: Huawei Technologies Co., Ltd., Longgang District Shenzhen, Guangdong 518129 (CN)
(72) Inventor: XUE, Li, Shenzhen Guangdong 518129 (CN); JIANG, Sheng, Shenzhen Guangdong 518129 (CN)
(74) Representative: Pfenning, Meinig & Partner GbR
(86) International application number: PCT/CN2012/084069
(87) International publication number: WO 2014/067157

(57) **Abstract**

Embodiments of the present invention provide a method of receiving a packet, including: receiving, by a network device, a first packet sent by a first terminal, where a packet header of the first packet includes subscription information corresponding to the first terminal, the subscription information is information about a first service or an identifier of a terminal group, the first service is a service subscribed by the first terminal, and the terminal group includes the first terminal and a second terminal; and performing, by the network device, a first operation on the first packet according to the subscription information, where the first operation is an operation corresponding to quality of service, traffic statistics, or accounting. In addition, the embodiments of the present invention further provide a corresponding network device. In the technical solutions provided in the embodiments of the present invention, an operation may be performed on a packet according to subscription information.

## Description

### TECHNICAL FIELD

The present invention relates to the communications field, and in particular, to a method of receiving a packet and a network device.

### BACKGROUND

After receiving a packet, a network device can perform an operation corresponding to quality of service (quality of service, QoS) on the packet according to a type of service (type of service, ToS) in the packet. For example, a router may perform, according to a ToS in an Internet Protocol version 4 (Internet Protocol version 4, IPv4) packet, an operation corresponding to a priority on the IPv4 packet.

In the prior art, a network device cannot perform an operation on a packet according to subscription information.

### SUMMARY

Embodiments of the present invention provide a method of receiving a packet and a network device, and an operation can be performed on a packet according to subscription information.

According to a first aspect, a method of receiving a packet is provided, including:
receiving, by a network device, a first packet sent by a first terminal, where a packet header of the first packet includes subscription information corresponding to the first terminal, the subscription information is information about a first service or an identifier of a terminal group, the first service is a service subscribed by the first terminal, and the terminal group includes the first terminal and a second terminal; and
performing, by the network device, a first operation on the first packet according to the subscription information, where the first operation is an operation corresponding to quality of service, traffic statistics, or accounting.

It may be seen from the foregoing technical solution that the network device may perform an operation on the first packet according to the subscription information carried in the first packet.

In a first possible implementation manner of the method provided in the first aspect, if the subscription information is the information about the first service, and the first packet is an Internet Protocol version 6 packet, the subscription information is carried in a prefix of a source Internet Protocol version 6 address of the Internet Protocol version 6 packet.

According to the first possible implementation manner of the method provided in the first aspect, in a second possible implementation manner of the method provided in the first aspect, before the network device receives the first packet sent by the first terminal, the method further includes:
receiving, by the network device, a Dynamic Host Configuration Protocol version 6 request sent by the first terminal;
forwarding, by the network device, the Dynamic Host Configuration Protocol version 6 request to a Dynamic Host Configuration Protocol server, to enable the Dynamic Host Configuration Protocol server to acquire the subscription information from a subscription database, and generate a Dynamic Host Configuration Protocol version 6 response according to the subscription information, where the Dynamic Host Configuration Protocol version 6 response is a response corresponding to the Dynamic Host Configuration Protocol version 6 request, the Dynamic Host Configuration Protocol version 6 response includes the source Internet Protocol version 6 address, and the subscription database stores the subscription information;
receiving, by the network device, the Dynamic Host Configuration Protocol version 6 response sent by the Dynamic Host Configuration Protocol server; and
forwarding, by the network device, the Dynamic Host Configuration Protocol version 6 response to the first terminal.

In a third possible implementation manner of the method provided in the first aspect, if the subscription information is the identifier of the terminal group, and the first packet is an Internet Protocol version 6 packet, the subscription information is carried in an extended header of the Internet Protocol version 6 packet.

According to the third possible implementation manner of the method provided in the first aspect, in a fourth possible implementation manner of the method provided in the first aspect, before the network device receives the first packet sent by the first terminal, the method further includes:
receiving, by the network device, a Dynamic Host Configuration Protocol version 6 request sent by the first terminal;
forwarding, by the network device, the Dynamic Host Configuration Protocol version 6 request to a Dynamic Host Configuration Protocol server, to enable the Dynamic Host Configuration Protocol server to acquire the subscription information from a subscription database, and generate a Dynamic Host Configuration Protocol version 6 response according to the subscription information, where the Dynamic Host Configuration Protocol version 6 response is a response corresponding to the Dynamic Host Configuration Protocol version 6 request, an extended attribute of the Dynamic Host Configuration Protocol version 6 response includes the subscription information, and the subscription database stores the subscription information;
receiving, by the network device, the Dynamic Host Configuration Protocol version 6 response sent by the Dynamic Host Configuration Protocol server; and
forwarding, by the network device, the Dynamic Host Configuration Protocol version 6 response to the first terminal.

According to the method provided in the first aspect, the first possible implementation manner of the method provided in the first aspect, the second possible implementation manner of the method provided in the first aspect, the third possible implementation manner of the method provided in the first aspect, and the fourth possible implementation manner of the method provided in the first aspect, in a fifth possible implementation manner of the method provided in the first aspect, the performing, by the network device, the first operation on the first packet according to the subscription information specifically includes:
if the first operation is the operation corresponding to the quality of service, determining, by the network device, an identifier of the quality of service according to a correspondence between the subscription information and the identifier of the quality of service; and
performing, by the network device, the operation corresponding to the quality of service on the first packet according to the identifier of the quality of service; where:
   the determining, by the network device, an identifier of the quality of service according to a correspondence between the subscription information and the identifier of the quality of service is specifically:
      determining, by the network device, the identifier of the quality of service according to the identifier of the quality of service corresponding to the subscription information; or
      determining, by the network device, the identifier of the quality of service according to the identifier of the quality of service corresponding to the subscription information and a type of service, where the packet header includes the type of service; or
      determining, by the network device, a first type of service according to a correspondence between the subscription information and the first type of service, replacing, by the network device, a second type of service in the first packet with the first type of service, and determining, by the network device, the identifier of the quality of service according to a correspondence between the first type of service and the identifier of the quality of service.

According to a second aspect, a network device is provided, including:
a first receiving unit, configured to receive a first packet sent by a first terminal, where a packet header of the first packet includes subscription information corresponding to the first terminal, the subscription information is information about a first service or an identifier of a terminal group, the first service is a service subscribed by the first terminal, and the terminal group includes the first terminal and a second terminal; and
an operating unit, configured to perform a first operation on the first packet according to the subscription information in the first packet received by the first receiving unit, where the first operation is an operation corresponding to quality of service, traffic statistics, or accounting.

It may be seen from the foregoing technical solution that the network device may perform an operation on the first packet according to the subscription information carried in the first packet.

In a first possible implementation manner of the network device provided in the second aspect,
if the subscription information is the information about the first service, and the first packet is an Internet Protocol version 6 packet, the subscription information is carried in a prefix of a source Internet Protocol version 6 address of the Internet Protocol version 6 packet.

According to the first possible implementation manner of the network device provided in the second aspect, in a second possible implementation manner of the network device provided in the second aspect,
the first receiving unit is further configured to receive a Dynamic Host Configuration Protocol version 6 request sent by the first terminal; and
the network device further includes:
a first forwarding unit, configured to forward the Dynamic Host Configuration Protocol version 6 request received by the first receiving unit to a Dynamic Host Configuration Protocol server, to enable the Dynamic Host Configuration Protocol server to acquire the subscription information from a subscription database, and generate a Dynamic Host Configuration Protocol version 6 response according to the subscription information, where the Dynamic Host Configuration Protocol version 6 response is a response corresponding to the Dynamic Host Configuration Protocol version 6 request, the Dynamic Host Configuration Protocol version 6 response includes the source Internet Protocol version 6 address, and the subscription database stores the subscription information;
a second receiving unit, configured to receive the Dynamic Host Configuration Protocol version 6 response sent by the Dynamic Host Configuration Protocol server; and
a second forwarding unit, configured to forward the Dynamic Host Configuration Protocol version 6 response received by the second receiving unit to the first terminal before the first receiving unit receives the first packet.

In a third possible implementation manner of the network device provided in the second aspect,
if the subscription information is the identifier of the terminal group, and the first packet is an Internet Protocol version 6 packet, the subscription information is carried in an extended header of the Internet Protocol version 6 packet.

According to the third possible implementation manner of the network device provided in the second aspect, in a fourth possible implementation manner of the network device provided in the second aspect,
the first receiving unit is further configured to receive a Dynamic Host Configuration Protocol version 6 request sent by the first terminal; and
the network device further includes:
a first forwarding unit, configured to forward the Dynamic Host Configuration Protocol version 6 request received by the first receiving unit to a Dynamic Host Configuration Protocol server, to enable the Dynamic Host Configuration Protocol server to acquire the subscription information from a subscription database, and generate a Dynamic Host Configuration Protocol version 6 response according to the subscription information, where the Dynamic Host Configuration Protocol version 6 response is a response corresponding to the Dynamic Host Configuration Protocol version 6 request, an extended attribute of the Dynamic Host Configuration Protocol version 6 response includes the subscription information, and the subscription database stores the subscription information;
a second receiving unit, configured to receive the Dynamic Host Configuration Protocol version 6 response sent by the Dynamic Host Configuration Protocol server; and
a second forwarding unit, configured to forward the Dynamic Host Configuration Protocol version 6 response received by the second receiving unit to the first terminal before the first receiving unit receives the first packet sent by the first terminal.

According to the network device provided in the second aspect, the first possible implementation manner of the network device provided in the second aspect, the second possible implementation manner of the network device provided in the second aspect, the third possible implementation manner of the network device provided in the second aspect, and the fourth possible implementation manner of the network device provided in the second aspect, in a fifth possible implementation manner of the network device provided in the second aspect,
the operating unit specifically includes:
a determining subunit, configured to, if the first operation is the operation corresponding to the quality of service, determine an identifier of the quality of service according to a correspondence between the subscription information and the identifier of the quality of service; and
an operating subunit, configured to perform the operation corresponding to the quality of service on the first packet according to the identifier, determined by the determining subunit, of the quality of service; where:
   the determining subunit is specifically configured to determine the identifier of the quality of service according to the identifier of the quality of service corresponding to the subscription information; or
   the determining subunit is specifically configured to determine the identifier of the quality of service according to the identifier of the quality of service corresponding to the subscription information and a type of service, where the packet header includes the type of service; or
   the determining subunit is specifically configured to: determine a first type of service according to a correspondence between the subscription information and the first type of service, replace a second type of service in the first packet with the first type of service by the network device, and determine the identifier of the quality of service according to a correspondence between the first type of service and the identifier of the quality of service by the network device.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic flowchart of a method of receiving a packet according to an embodiment of the present invention;
FIG. 2 is a schematic flowchart of a method of receiving a packet according to an embodiment of the present invention;
FIG. 3 is a schematic flowchart of a method of receiving a packet according to an embodiment of the present invention;
FIG. 4 is a schematic structural diagram of a network device according to an embodiment of the present invention;
FIG. 5 is a schematic structural diagram of a network device according to an embodiment of the present invention;
FIG. 6 is a schematic structural diagram of a network device according to an embodiment of the present invention; and
FIG. 7 is a schematic structural diagram of an operating unit according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

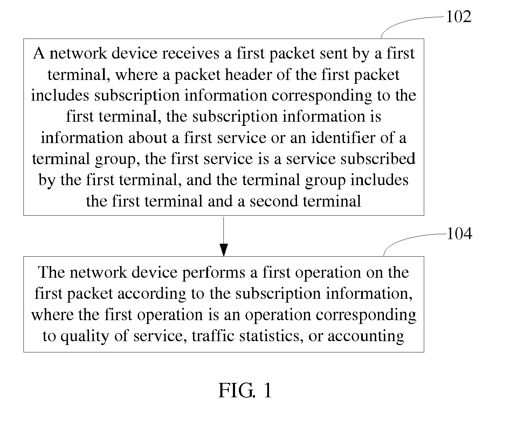

FIG. 1 is a schematic flowchart of a method of receiving a packet according to an embodiment of the present invention. Referring to FIG. 1, the method includes the following steps:
102. A network device receives a first packet sent by a first terminal, where a packet header of the first packet includes subscription information corresponding to the first terminal, the subscription information is information about a first service or an identifier of a terminal group, the first service is a service subscribed by the first terminal, and the terminal group includes the first terminal and a second terminal.

For example, the network device may be a base station, a digital subscriber line access multiplexer (digital subscriber line access multiplexer, DSLAM), a router, a home gateway, a broadband remote access server (broadband remote access server, BRAS), or an access point (access point, AP).

The first terminal can access a network by using the network device. The network may be a public network, or may be a virtual private network (virtual private network, VPN). For example, the first terminal may be a mobile phone, a personal computer (personal computer, PC), or a personal digital assistant (personal data assistant, PDA).

The first packet may be an Internet Protocol (Internet Protocol, IP) packet.

A person skilled in the art may understand that the subscription information may be stored in a subscription database of an Authentication, Authorization and Accounting server (Authentication, Authorization and Accounting server, AAA server).

The subscription database may be obtained by using the following process. When expecting to access the network by using the first terminal, a potential user of the network may sign a contract with an operator to enable a service of the network. An engineer of the operator may configure the subscription database in the AAA server by using a command line.

For example, the first service may be a video service, or may be an online game service. The information about the first service may be type information of the first service, or accounting information of the first service, or information about quality of service of the first service. The accounting information of the first service may be information about an accounting manner, or may be a parameter of the accounting manner. The accounting manner may be accounting according to traffic, or may be accounting according to time. If the accounting manner is the accounting according to traffic, the parameter of the accounting manner may be an amount of traffic and an amount of cost. If the accounting manner is the accounting according to time, the parameter of the accounting manner may be a length of time and an amount of cost.

The first service may be a service subscribed by the first terminal from the AAA server.

The terminal group includes the first terminal and the second terminal. The second terminal may be a mobile phone, a personal computer, or a personal digital assistant. The second terminal and the first terminal are not a same device.

For example, the terminal group may further include a terminal in addition to the first terminal and the second terminal.

For example, the identifier of the terminal group may correspond to only one subscription account. That the identifier of the terminal group corresponds to only one subscription account means that cost for members in the terminal group to access the network will be accumulated to a same account. The members in the terminal group include the first terminal and the second terminal.

For example, the identifier of the terminal group may correspond to a subscription account of the first terminal and a subscription account of the second terminal. That the identifier of the terminal group corresponds to the subscription account of the first terminal and the subscription account of the second terminal means that cost for the first terminal to access the network and cost for the second terminal to access the network will be separately accumulated to two accounts.
104. The network device performs a first operation on the first packet according to the subscription information, where the first operation is an operation corresponding to quality of service, traffic statistics, or accounting.

For example, the network device stores a correspondence between the subscription information and an identifier of the first operation. The network device may determine the identifier of the first operation according to the correspondence between the subscription information and the identifier of the first operation. The network device may perform the first operation on the first packet according to the identifier of the first operation.

For example, the quality of service may be a delay, a packet loss, jitter, bandwidth, or a priority.

It may be seen from the foregoing technical solution that the network device may perform the first operation on the first packet according to the subscription information carried in the first packet.

Optionally, in the method described in FIG. 1, if the subscription information is the information about the first service, and the first packet may be an Internet Protocol version 6 (Internet Protocol version 6, IPv6) packet, the subscription information is carried in a prefix of a source IPv6 address of the IPv6 packet.

For example, the subscription information may be carried in some bits of the prefix.

Optionally, in the method described in FIG. 1, before the network device receives the first packet sent by the first terminal, the method may further include the following steps:
202. The network device receives a Dynamic Host Configuration Protocol version 6 (Dynamic Host Configuration Protocol version 6, DHCPv6) request sent by the first terminal.

For example, the DHCPv6 request may include an identifier of the first terminal.
204. The network device forwards the DHCPv6 request to a DHCP server, to enable the DHCP server to acquire the subscription information from a subscription database, and generate a DHCPv6 response according to the subscription information, where the DHCPv6 response is a response corresponding to the DHCPv6 request, the DHCPv6 response includes the source IPv6 address, and the subscription database stores the subscription information.

For example, the subscription database may be stored in the AAA server. The subscription database may store a correspondence between the identifier of the first terminal and the subscription information.
206. The network device receives the DHCPv6 response sent by the DHCP server.
208. The network device forwards the DHCPv6 response to the first terminal.

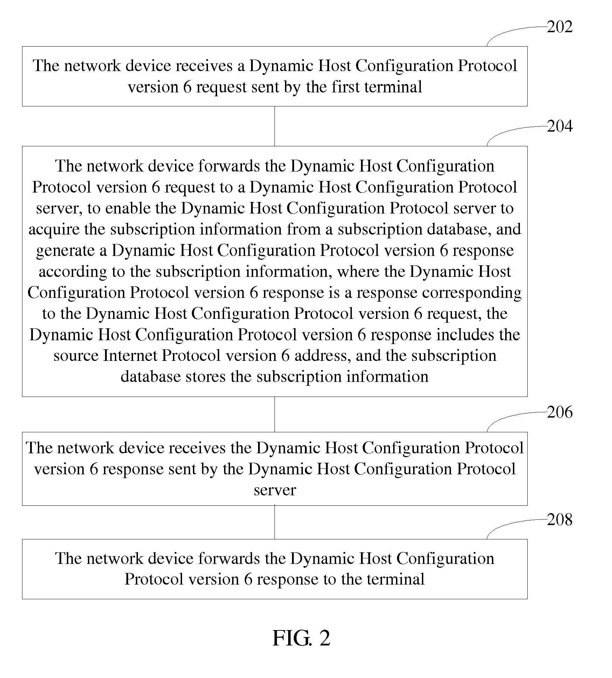

For 202, 204, 206, and 208, refer to FIG. 2.

For example, the identifier of the first terminal may be an international mobile subscriber identity (International Mobile Subscriber Identification, ISMI) or an international mobile equipment identity (International Mobile Equipment Identity, IMEI).

Optionally, in the method described in FIG. 1, if the subscription information is the identifier of the terminal group, and the first packet is an IPv6 packet, the subscription information may be carried in an extended header (extended header) of the IPv6 packet.

For example, a value of a next header (next header) of the IPv6 packet may be 0 or a value that has not been defined.

Optionally, in the method described in FIG. 1, before the network device receives the first packet sent by the first terminal, the method may further include the following steps:
302. The network device receives a DHCPv6 request sent by the first terminal.

For example, the DHCPv6 request may include an identifier of the first terminal.
304. The network device forwards the DHCPv6 request to a DHCP server, to enable the DHCP server to acquire the subscription information from a subscription database, and generate a DHCPv6 response according to the subscription information, where the DHCPv6 response is a response corresponding to the DHCPv6 request, an extended attribute of the DHCPv6 response includes the subscription information, and the subscription database stores the subscription information.

For example, the subscription database may be stored in the AAA server. The subscription database may store a correspondence between the identifier of the first terminal and the subscription information.
306. The network device receives the DHCPv6 response sent by the DHCP server.
308. The network device forwards the DHCPv6 response to the first terminal.

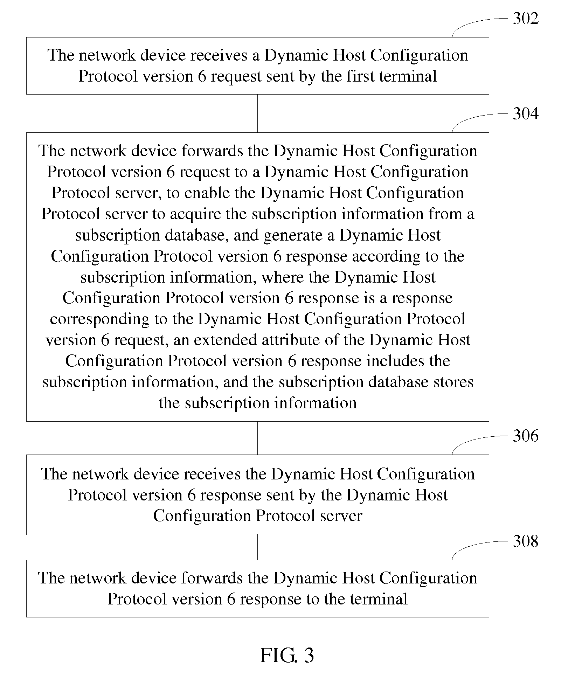

For 302, 304, 306, and 308, refer to FIG. 3.

Optionally, in the method described in FIG. 1, the performing, by the network device, the first operation on the first packet according to the subscription information specifically includes:
if the first operation is the operation corresponding to the quality of service, determining, by the network device, an identifier of the quality of service according to a correspondence between the subscription information and the identifier of the quality of service; and
performing, by the network device, the operation corresponding to the quality of service on the first packet according to the identifier of the quality of service

The determining, by the network device, an identifier of the quality of service according to a correspondence between the subscription information and the identifier of the quality of service is specifically:
determining, by the network device, the identifier of the quality of service according to the identifier of the quality of service corresponding to the subscription information.

Optionally, in the method described in FIG. 1, the performing, by the network device, the first operation on the first packet according to the subscription information specifically includes:
if the first operation is the operation corresponding to the quality of service, determining, by the network device, an identifier of the quality of service according to a correspondence between the subscription information and the identifier of the quality of service; and
performing, by the network device, the operation corresponding to the quality of service on the first packet according to the identifier of the quality of service

The determining, by the network device, an identifier of the quality of service according to a correspondence between the subscription information and the identifier of the quality of service is specifically:
determining, by the network device, the identifier of the quality of service according to the identifier of the quality of service corresponding to the subscription information and a type of service (type of service, ToS), where the packet header includes the type of service.

For example, the network device may store the subscription information, the type of service, and the identifier of the quality of service corresponding to the subscription information and the type of service in advance. If the network device determines that the subscription information in the packet header matches the subscription information in the network device, and the type of service in the packet header matches the type of service in the network device, the network device determines the identifier of the quality of service.

Optionally, in the method described in FIG. 1, the performing, by the network device, the first operation on the first packet according to the subscription information specifically includes:
if the first operation is the operation corresponding to the quality of service, determining, by the network device, an identifier of the quality of service according to a correspondence between the subscription information and the identifier of the quality of service; and
performing, by the network device, the operation corresponding to the quality of service on the first packet according to the identifier of the quality of service.

The determining, by the network device, an identifier of the quality of service according to a correspondence between the subscription information and the identifier of the quality of service is specifically:
determining, by the network device, a first type of service according to a correspondence between the subscription information and the first type of service, replacing, by the network device, a second type of service in the first packet with the first type of service, and determining, by the network device, the identifier of the quality of service according to a correspondence between the first type of service and the identifier of the quality of service.

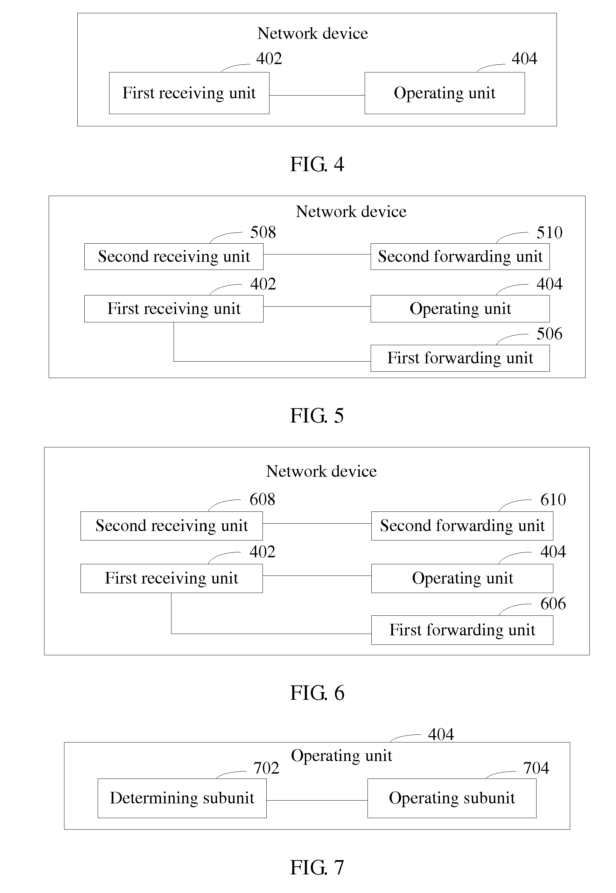

FIG. 4 is a schematic structural diagram of a network device according to an embodiment of the present invention. The network device may perform the method shown in FIG. 1. Referring to FIG. 4, the network device includes a first receiving unit 402 and an operating unit 404.

The first receiving unit 402 is configured to receive a first packet sent by a first terminal, where a packet header of the first packet includes subscription information corresponding to the first terminal, the subscription information is information about a first service or an identifier of a terminal group, the first service is a service subscribed by the first terminal, and the terminal group includes the first terminal and a second terminal.

For example, the first receiving unit 402 may be a first receiver of the network device.

For example, the network device may be a base station, a DSLAM, a router, a home gateway, a BRAS, or an access point AP.

The first terminal can access a network by using the network device. The network may be a public network, or may be a VPN. For example, the first terminal may be a mobile phone, a PC, or a PDA.

The first packet may be an IP packet.

A person skilled in the art may understand that the subscription information may be stored in a subscription database of an AAA server.

The subscription database may be obtained by using the following process. When expecting to access the network by using the first terminal, a potential user of the network may sign a contract with an operator to enable a service of the network. An engineer of the operator may configure the subscription database in the AAA server by using a command line.

For example, the first service may be a video service, or may be an online game service. The information about the first service may be type information of the first service, or accounting information of the first service, or information about quality of service of the first service. The accounting information of the first service may be information about an accounting manner, or may be a parameter of the accounting manner. The accounting manner may be accounting according to traffic, or may be accounting according to time. If the accounting manner is the accounting according to traffic, the parameter of the accounting manner may be an amount of traffic and an amount of cost. If the accounting manner is the accounting according to time, the parameter of the accounting manner may be a length of time and an amount of cost.

The first service may be a service subscribed by the first terminal from the AAA server.

The terminal group includes the first terminal and the second terminal. The second terminal may be a mobile phone, a personal computer, or a personal digital assistant. The second terminal and the first terminal are not a same device.

For example, the terminal group may further include a terminal in addition to the first terminal and the second terminal.

For example, the identifier of the terminal group may correspond to only one subscription account. That the identifier of the terminal group corresponds to only one subscription account means that cost for members in the terminal group to access the network will be accumulated to a same account. The members in the terminal group include the first terminal and the second terminal.

For example, the identifier of the terminal group may correspond to a subscription account of the first terminal and a subscription account of the second terminal. That the identifier of the terminal group corresponds to the subscription account of the first terminal and the subscription account of the second terminal means that cost for the first terminal to access the network and cost for the second terminal to access the network will be separately accumulated to two accounts.

The operating unit 404 is configured to perform a first operation on the first packet according to the subscription information in the first packet received by the first receiving unit 402, where the first operation is an operation corresponding to quality of service, traffic statistics, or accounting.

For example, the network device may store a correspondence between the subscription information and an identifier of the first operation. The network device may determine the identifier of the first operation according to the correspondence between the subscription information and the identifier of the first operation. The network device may perform the first operation on the first packet according to the identifier of the first operation.

For example, the quality of service may be a delay, a packet loss, jitter, bandwidth, or a priority.

It may be seen from the foregoing technical solution that the network device may perform the first operation on the first packet according to the subscription information carried in the first packet.

Optionally, in the network device shown in FIG. 4, if the subscription information is the information about the first service, and the first packet is an IPv6 packet, the subscription information is carried in a prefix of a source IPv6 address of the IPv6 packet.

For example, the subscription information may be carried in some bits of the prefix.

Optionally, in the network device shown in FIG. 4, the first receiving unit 402 may be further configured to receive a DHCPv6 request sent by the first terminal.

The network device may further include:
a first forwarding unit 506, configured to forward the DHCPv6 request received by the first receiving unit 402 to a DHCP server, to enable the DHCP server to acquire the subscription information from a subscription database, and generate a DHCPv6 response according to the subscription information, where the DHCPv6 response is a response corresponding to the DHCPv6 request, the DHCPv6 response includes the source IPv6 address, and the subscription database stores the subscription information;
a second receiving unit 508, configured to receive the DHCPv6 response sent by the DHCP server; and
a second forwarding unit 510, configured to forward the DHCPv6 response received by the second receiving unit 508 to the first terminal before the first receiving unit 402 receives the first packet.

For the first forwarding unit 506, the second receiving unit 508, and the second forwarding unit 510, refer to FIG. 5.

For example, the DHCPv6 request may include an identifier of the first terminal.

For example, the subscription information may be stored in the AAA server.

For example, the subscription database may store a correspondence between the identifier of the first terminal and the subscription information.

For example, the first forwarding unit 506 may be a first forwarder of the network device. The second receiving unit 508 may be a second receiver of the network device. The second forwarding unit 510 may be a second forwarder of the network device.

For example, the identifier of the first terminal may be an ISMI or IMEI.

Optionally, in the network device shown in FIG. 4, if the subscription information is the identifier of the terminal group, and the first packet is an IPv6 packet, the subscription information is carried in an extended header of the IPv6 packet.

For example, a value of a next header of the IPv6 packet may be 0 or a value that has not been defined.

Optionally, in the network device shown in FIG. 4, the first receiving unit 402 may be further configured to receive a DHCPv6 request sent by the first terminal; and
the network device further includes:
a first forwarding unit 606, configured to forward the DHCPv6 request received by the first receiving unit 402 to a DHCP server, to enable the DHCP server to acquire the subscription information from a subscription database, and generate a DHCPv6 response according to the subscription information, where the DHCPv6 response is a response corresponding to the DHCPv6 request, an extended attribute of the DHCPv6 response includes the subscription information, and the subscription database stores the subscription information;
a second receiving unit 608, configured to receive the DHCPv6 response sent by the DHCP server; and
a second forwarding unit 610, configured to forward the DHCPv6 response received by the second receiving unit 608 to the first terminal before the first receiving unit 402 receives the first packet sent by the first terminal.

For example, the first forwarding unit 606 may be a first forwarder of the network device. The second receiving unit 608 may be a second receiver of the network device. The second forwarding unit 610 may be a second forwarder of the network device.

For example, the DHCPv6 request may include an identifier of the first terminal.

For example, the subscription information may be stored in the AAA server.

For example, the subscription database may store a correspondence between the identifier of the first terminal and the subscription information.

For the first forwarding unit 606, the second receiving unit 608, and the second forwarding unit 610, refer to FIG. 6.

Optionally, in the network device shown in FIG. 4, the operating unit 404 may specifically include:
a determining subunit 702, configured to, if the first operation is the operation corresponding to the quality of service, determine an identifier of the quality of service according to a correspondence between the subscription information and the identifier of the quality of service; and
an operating subunit 704, configured to perform the operation corresponding to the quality of service on the first packet according to the identifier, determined by the determining subunit 702, of the quality of service; where:
the determining subunit 702 is specifically configured to determine the identifier of the quality of service according to the identifier of the quality of service corresponding to the subscription information.

Optionally, in the network device shown in FIG. 4, the operating unit 404 may specifically include:
a determining subunit 702, configured to, if the first operation is the operation corresponding to the quality of service, determine an identifier of the quality of service according to a correspondence between the subscription information and the identifier of the quality of service; and
an operating subunit 704, configured to perform the operation corresponding to the quality of service on the first packet according to the identifier, determined by the determining subunit 702, of the quality of service; where:
   the determining subunit 702 is specifically configured to determine the identifier of the quality of service according to the identifier of the quality of service corresponding to the subscription information and , a type of service, where the packet header includes the type of service.

For example, the network device may store the subscription information, the type of service, and the identifier of the quality of service corresponding to the subscription information and the type of service in advance. If the network device determines that the subscription information in the packet header matches the subscription information in the network device, and the type of service in the packet header matches the type of service in the network device, the network device determines the identifier of the quality of service.

Optionally, in the network device shown in FIG. 4, the operating unit 404 may specifically include:
a determining subunit 702, configured to, if the first operation is the operation corresponding to the quality of service, determine an identifier of the quality of service according to a correspondence between the subscription information and the identifier of the quality of service; and
an operating subunit 704, configured to perform the operation corresponding to the quality of service on the first packet according to the identifier, determined by the determining subunit 702, of the quality of service; where:
   the determining subunit 702 is specifically configured to: determine a first type of service according to a correspondence between the subscription information and the first type of service, replace a second type of service in the first packet with the first type of service by the network device, and determine the identifier of the quality of service according to a correspondence between the first type of service and the identifier of the quality of service by the network device.

For the determining subunit 702 and the operating subunit 704, specifically, refer to FIG. 7.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division may merely be logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, Abbreviation: ROM), a random access memory (Random Access Memory, Abbreviation: RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method of receiving a packet, comprising:
receiving, by a network device, a first packet sent by a first terminal, wherein a packet header of the first packet comprises subscription information corresponding to the first terminal, the subscription information is information about a first service or an identifier of a terminal group, the first service is a service subscribed by the first terminal, and the terminal group comprises the first terminal and a second terminal; and
performing, by the network device, a first operation on the first packet according to the subscription information, wherein the first operation is an operation corresponding to quality of service, traffic statistics, or accounting.

2. The method according to claim 1, wherein:
if the subscription information is the information about the first service, and the first packet is an Internet Protocol version 6 packet, the subscription information is carried in a prefix of a source Internet Protocol version 6 address of the Internet Protocol version 6 packet.

3. The method according to claim 2, wherein:
before the network device receives the first packet sent by the first terminal, the method further comprises:
receiving, by the network device, a Dynamic Host Configuration Protocol version 6 request sent by the first terminal;
forwarding, by the network device, the Dynamic Host Configuration Protocol version 6 request to a Dynamic Host Configuration Protocol server, to enable the Dynamic Host Configuration Protocol server to acquire the subscription information from a subscription database, and generate a Dynamic Host Configuration Protocol version 6 response according to the subscription information, wherein the Dynamic Host Configuration Protocol version 6 response is a response corresponding to the Dynamic Host Configuration Protocol version 6 request, the Dynamic Host Configuration Protocol version 6 response comprises the source Internet Protocol version 6 address, and the subscription database stores the subscription information;
receiving, by the network device, the Dynamic Host Configuration Protocol version 6 response sent by the Dynamic Host Configuration Protocol server; and
forwarding, by the network device, the Dynamic Host Configuration Protocol version 6 response to the first terminal.

4. The method according to claim 1, wherein:
if the subscription information is the identifier of the terminal group, and the first packet is an Internet Protocol version 6 packet, the subscription information is carried in an extended header of the Internet Protocol version 6 packet.

5. The method according to claim 4, wherein:
before the network device receives the first packet sent by the first terminal, the method further comprises:
receiving, by the network device, a Dynamic Host Configuration Protocol version 6 request sent by the first terminal;
forwarding, by the network device, the Dynamic Host Configuration Protocol version 6 request to a Dynamic Host Configuration Protocol server, to enable the Dynamic Host Configuration Protocol server to acquire the subscription information from a subscription database, and generate a Dynamic Host Configuration Protocol version 6 response according to the subscription information, wherein the Dynamic Host Configuration Protocol version 6 response is a response corresponding to the Dynamic Host Configuration Protocol version 6 request, an extended attribute of the Dynamic Host Configuration Protocol version 6 response comprises the subscription information, and the subscription database stores the subscription information;
receiving, by the network device, the Dynamic Host Configuration Protocol version 6 response sent by the Dynamic Host Configuration Protocol server; and
forwarding, by the network device, the Dynamic Host Configuration Protocol version 6 response to the first terminal.

6. The method according to any one of claims 1 to 5, wherein:
the performing, by the network device, the first operation on the first packet according to the subscription information specifically comprises:
if the first operation is the operation corresponding to the quality of service, determining, by the network device, an identifier of the quality of service according to a correspondence between the subscription information and the identifier of the quality of service; and
performing, by the network device, the operation corresponding to the quality of service on the first packet according to the identifier of the quality of service; wherein:
the determining, by the network device, an identifier of the quality of service according to a correspondence between the subscription information and the identifier of the quality of service is specifically:
determining, by the network device, the identifier of the quality of service according to the identifier of the quality of service corresponding to the subscription information; or
determining, by the network device, the identifier of the quality of service according to the identifier of the quality of service corresponding to the subscription information and a type of service, wherein the packet header comprises the type of service; or
determining, by the network device, a first type of service according to a correspondence between the subscription information and the first type of service, replacing, by the network device, a second type of service in the first packet with the first type of service, and determining, by the network device, the identifier of the quality of service according to a correspondence between the first type of service and the identifier of the quality of service.

7. A network device, comprising:
a first receiving unit, configured to receive a first packet sent by a first terminal, wherein a packet header of the first packet comprises subscription information corresponding to the first terminal, the subscription information is information about a first service or an identifier of a terminal group, the first service is a service subscribed by the first terminal, and the terminal group comprises the first terminal and a second terminal; and
an operating unit, configured to perform a first operation on the first packet according to the subscription information in the first packet received by the first receiving unit, wherein the first operation is an operation corresponding to quality of service, traffic statistics, or accounting.

8. The network device according to claim 7, wherein:
if the subscription information is the information about the first service, and the first packet is an Internet Protocol version 6 packet, the subscription information is carried in a prefix of a source Internet Protocol version 6 address of the Internet Protocol version 6 packet.

9. The network device according to claim 8, wherein:
the first receiving unit is further configured to receive a Dynamic Host Configuration Protocol version 6 request sent by the first terminal; and
the network device further comprises:
a first forwarding unit, configured to forward the Dynamic Host Configuration Protocol version 6 request received by the first receiving unit to a Dynamic Host Configuration Protocol server, to enable the Dynamic Host Configuration Protocol server to acquire the subscription information from a subscription database, and generate a Dynamic Host Configuration Protocol version 6 response according to the subscription information, wherein the Dynamic Host Configuration Protocol version 6 response is a response corresponding to the Dynamic Host Configuration Protocol version 6 request, the Dynamic Host Configuration Protocol version 6 response comprises the source Internet Protocol version 6 address, and the subscription database stores the subscription information;
a second receiving unit, configured to receive the Dynamic Host Configuration Protocol version 6 response sent by the Dynamic Host Configuration Protocol server; and
a second forwarding unit, configured to forward the Dynamic Host Configuration Protocol version 6 response received by the second receiving unit to the first terminal before the first receiving unit receives the first packet.

10. The network device according to claim 7, wherein:
if the subscription information is the identifier of the terminal group, and the first packet is an Internet Protocol version 6 packet, the subscription information is carried in an extended header of the Internet Protocol version 6 packet.

11. The network device according to claim 10, wherein:
the first receiving unit is further configured to receive a Dynamic Host Configuration Protocol version 6 request sent by the first terminal; and
the network device further comprises:
a first forwarding unit, configured to forward the Dynamic Host Configuration Protocol version 6 request received by the first receiving unit to a Dynamic Host Configuration Protocol server, to enable the Dynamic Host Configuration Protocol server to acquire the subscription information from a subscription database, and generate a Dynamic Host Configuration Protocol version 6 response according to the subscription information, wherein the Dynamic Host Configuration Protocol version 6 response is a response corresponding to the Dynamic Host Configuration Protocol version 6 request, an extended attribute of the Dynamic Host Configuration Protocol version 6 response comprises the subscription information, and the subscription database stores the subscription information;
a second receiving unit, configured to receive the Dynamic Host Configuration Protocol version 6 response sent by the Dynamic Host Configuration Protocol server; and
a second forwarding unit, configured to forward the Dynamic Host Configuration Protocol version 6 response received by the second receiving unit to the first terminal before the first receiving unit receives the first packet sent by the first terminal.

12. The network device according to any one of claims 7 to 11, wherein the operating unit specifically comprises:
a determining subunit, configured to, if the first operation is the operation corresponding to the quality of service, determine an identifier of the quality of service according to a correspondence between the subscription information and the identifier of the quality of service; and
an operating subunit, configured to perform the operation corresponding to the quality of service on the first packet according to the identifier, determined by the determining subunit, of the quality of service; wherein:
the determining subunit is specifically configured to determine the identifier of the quality of service according to the identifier of the quality of service corresponding to the subscription information; or
the determining subunit is specifically configured to determine the identifier of the quality of service according to the identifier of the quality of service corresponding to the subscription information and a type of service, wherein the packet header comprises the type of service; or
the determining subunit is specifically configured to: determine a first type of service according to a correspondence between the subscription information and the first type of service, replace a second type of service in the first packet with the first type of service by the network device, and determine the identifier of the quality of service according to a correspondence between the first type of service and the identifier of the quality of service by the network device.
